(19) Europäisches Patentamt
European Patent Office
Office européen des brevets

(11) **EP 1 960 963 B1**

(12) **EUROPEAN PATENT SPECIFICATION**

(45) Date of publication and mention of the grant of the patent:
**04.11.2009 Bulletin 2009/45**

(21) Application number: **06841309.5**

(22) Date of filing: **07.12.2006**

(51) Int Cl.:
***G06T 1/00*** (2006.01)

(86) International application number:
**PCT/EP2006/069433**

(87) International publication number:
**WO 2007/068648 (21.06.2007 Gazette 2007/25)**

(54) **METHOD AND DEVICE FOR WATERMARKING ON STREAM**

VERFAHREN UND EINRICHTUNG FÜR WASSERZEICHEN AUF EINEM STROM

PROCEDE ET DISPOSITIF D'INSERTION DE FILIGRANE DANS UN FLUX

(84) Designated Contracting States:
**DE FR GB**

(30) Priority: **12.12.2005 FR 0553828**

(43) Date of publication of application:
**27.08.2008 Bulletin 2008/35**

(73) Proprietor: **Thomson Licensing**
**92100 Boulogne-Billancourt (FR)**

(72) Inventors:
• **NGUYEN, Philippe**
**F-35000 Rennes (FR)**
• **BAUDRY, Séverine**
**F-35000 Rennes (FR)**
• **NATUREL, Corinne**
**F-35700 Rennes (FR)**

(74) Representative: **Le Dantec, Claude et al**
**Thomson**
**European Patent Operations**
**46 Quai Alphonse Le Gallo**
**92648 Boulogne-Billancourt (FR)**

(56) References cited:
• **WU, G.-Z., WANG, Y.-J. AND HSU, W.-H.: "Robust watermark embeding/detection algorithm for H. 264 video" JOURNAL OF ELECTRONIC IMAGING, vol. 14, March 2005 (2005-03), pages 013013-1-013013-9, XP002394793**
• **NOORKAMI, M., MERSEREAU, R. M.: "Compressed-domain video watermarking for H. 264" IEEE INTERNATIONAL CONFERENCE ON IMAGE PROCESSING, ICIP05, 11 September 1005 (1005-09-11), - 14 September 2005 (2005-09-14) pages 1-4, XP002394794**
• **FALKOWSKI B J ET AL: "Image watermarking using Hadamard transforms" ELECTRONICS LETTERS, IEE STEVENAGE, GB, vol. 36, no. 3, 3 February 2000 (2000-02-03), pages 211-213, XP006014818 ISSN: 0013-5194**
• **SRINIVASAN R ET AL: "AN APPROXIMATION TO THE DISCRETE COSINE TRANSFORM FOR N=16*" SIGNAL PROCESSING, AMSTERDAM, NL, vol. 5, no. 1, January 1983 (1983-01), pages 81-85, XP008001117 ISSN: 0165-1684**

**Description**

1. Field of the invention

The invention relates to
a device and a method for watermarking or more precisely for inserting a fingerprint into a stream of compressed digital data.

2. State of the art

The invention relates to the general field of the watermarking of digital data. More precisely, it relates to a particular application of watermarking which is the insertion of fingerprint into digital data. Subsequently in the document, the terms "fingerprint" and "watermark" are used interchangeably to designate the digital code inserted into the compressed digital data. In order to protect a digital content (for example a video, audio or 3D data, etc.), it is known to insert a unique fingerprint into each of the data streams distributed so as to identify the person or the body having authorized the transmission of the said content without authorization. Thus, during the promotion of a film, DVDs watermarked with the aid of a different fingerprint are dispatched to selected persons. In the case of a leak, it is possible by reconstructing the fingerprint to identify the source of the leak. Other applications are possible: insert a watermark making it possible to identify the work or the beneficiaries, or else to transmit auxiliary data (metadata) via the watermark. Generally, for reasons of an economic nature, but also calculation capacity and time constraints, the watermarking is performed stream-wise (i.e. watermarking of the compressed data before entropy coding). The thus watermarked video will undergo multiple transformations such as for example a transcoding. But most of the current watermarking techniques make the inserted watermark depend on the compression parameters (for example type of transformation used), and do not therefore allow the subsequent decoding of the watermarking information when the video content has undergone transformations.
The document from Wu et al. entitled "Robust watermark embedding/detection algorithm for H.264 video" and published in the Journal of Electronic Imaging describes a blind watermark embedding/detection algorithm to embed watermarks into H.264's I pictures.
The document from Noorkami et al. entitled "Compressed-domain video watermarking for H.264" and published in ICIP05 describes a watermarking algorithm for H.264 whose security is based on the randomness of the watermark location.

3. Summary of the invention

The invention is aimed at alleviating at least one of the drawbacks of the prior art. More particularly, the invention proposes a stream-wise method of watermarking independent of the compression parameters used (for example type of the transform) so as to allow the reading of the watermark inserted independently of the format of the data received.
The invention as defined in claim 1 relates in particular to a method of watermarking a data set.
Preferably, the step of projection consists in applying to the first group of watermarking data a transform inverse to the first transform $T_1$ then in applying the second transform $T_2$ to the first group of watermarking data after the transformation by the inverse transform.
Preferably, the first group of watermarking data is generated by calculating, for each of the coefficients of the first group of coefficients, the difference between the coefficient after the first step of watermarking and the coefficient before the first step of watermarking. The coefficients modified by the first step of watermarking being known, the difference is calculated only for these coefficients, the other differences being set to zero.
According to a preferred embodiment, the second step of watermarking of the second group of coefficients consists in adding to each of the coefficients of the second group of coefficients the corresponding datum of the second group of watermarking data.
According to a particular embodiment, the data set comprises coded data of a sequence of images, the group of data of the set comprises coded data of a block of pixels of one of the images of the sequence and the steps of the method are applied after decoding to the group of data of the set.
Preferably, the data set comprises data coded in accordance with one of the coding standards belonging to the set of standards comprising:

-    H.264;
-    MPEG-2; and
-    VC1.

Advantageously, the steps of the method are applied only to groups of data comprising coded data of pixel blocks belonging to images of the sequence that are coded independently of the other images of the sequence.

According to a particular characteristic, the first transform $T_1$ is a discrete cosine transform operating on pixel blocks of size 8 by 8 pixels.

According to another characteristic, the second transform $T_2$ is an integer transform approximating a discrete cosine transform operating on pixel blocks of size 4 by 4 pixels.

According to an advantageous embodiment, the step of projection is followed by a step consisting in zeroing a maximum number of watermarking data of the second group of watermarking data while maximizing the associated watermarking energy, this step generating a sparse group of watermarking data. The energy of the watermarking associated with the second group of watermarking data is proportional to the square root of the sum of the data of the second group of watermarking data squared.

Preferably, if the predetermined watermarking process modifies the value of a single coefficient in the first group of coefficients, the step consisting in zeroing a maximum number of watermarking data in the second group of watermarking data is followed by a step consisting in modifying the value of the nonzero data of the sparse group of watermarking data to generate a pre-emphasized sparse group of watermarking data in such a way that, when the pre-emphasized sparse group of watermarking data is projected into the first transformation space, the nonzero datum in the first group of watermarking data has the same value as the corresponding datum of the pre-emphasized sparse group of watermarking data after projection into the first transformation space.

According to an advantageous characteristic, the predetermined watermarking process consists for a first group of coefficients with which is associated a watermarking bit *bi*-in modifying the value of at most two coefficients $\ulcorner_1$ and $\ulcorner_2$ of the first group of coefficients so that the following order relation holds:

$$\left| \Gamma_1^{'} \right| = \left| \Gamma_2^{'} \right| + d * B_i,$$

where: - $\Gamma_1^{'}$ and $\Gamma_2^{'}$ are the two modified coefficients;

- *d* is a marking parameter called the marking distance; and
- $B_i$ is a coefficient whose value is defined as follows: $B_i$ =1 if *bi*=0 and $B_i$ = -1 if *bi*=1.

According to another advantageous embodiment, if the predetermined watermarking process modifies the value of N coefficients in the first group of coefficients, the step of projection into the second transformation space is performed jointly with a step consisting in zeroing data of the second group of watermarking data and a step consisting in modifying the values of the M data of the second group of nonzeroed watermarking data thus generating a pre-emphasized sparse group of watermarking data. The values and the positions of the M nonzero data are determined so that the quadratic energy associated with the pre-emphasized sparse group of watermarking data is minimized and so that when the pre-emphasized sparse group of watermarking data is projected into the first transformation space, each of the N nonzero data in the first group of watermarking data has the same value as the corresponding datum of the pre-emphasized sparse group of watermarking data after projection into the first transformation space, with N≥2 and M≥2. Preferably, N=M=2 and the quadratic energy associated with the pre-emphasized sparse group of watermarking data is equal the square root of the sum of the coefficients of the pre-emphasized sparse group of watermarking data squared.

Advantageously, the data set belongs to the group comprising:

- data of the image sequence type;
- data of the audio type; and
- data of the 3D type.

The invention also relates to a device for watermarking a data set which comprises:

- first means of transforming at least one group of data of the set into a first group of coefficients in a first transformation space;
- first predetermined watermarking means for watermarking the first group of coefficients;
- means for generating a first group of watermarking data representing the modifications induced by the first watermarking means on the coefficients of the first group of coefficients;
- means for projecting the first group of watermarking data into a second transformation space, the means generating a second group of watermarking data;
- second means of transforming the group of data into a second group of coefficients in the second transformation space; and
- first watermarking means for watermarking the second group of coefficients with the second group of watermarking data.

The invention also relates to a computer program product that comprises program code instructions for the execution of the steps of the method according to the invention, when the said program is executed on a computer.

4. Lists of figures

The invention will be better understood and illustrated by means of wholly nonlimiting advantageous exemplary embodiments and modes of implementation, with reference to the appended figures in which:

- Figure 1 illustrates the watermarking method according to the invention;
- Figure 2 represents various contribution matrices in the DCT and H transformation spaces;
- Figure 3 illustrates a particular embodiment of the watermarking method according to the invention;
- Figure 4 represents a sparse contribution matrix in the H space, pre-emphasized according to a particular embodiment of the invention;
- Figure 5 illustrates a watermark reading process operating in the DCT transformation space; and
- Figure 6 illustrates a watermarking device according to the invention.

5. Detailed description of the invention

The invention relates to a method of watermarking a sequence of images or video independent of the compression parameters used to compress the said images. Each image of the sequence comprises pixels with each of which is associated at least one luminance value. When two pixel blocks are added together, this signifies that the value associated with a pixel with coordinates (i,j) in a block is added to the value associated with the pixel with coordinates (i,j) in the other block. When two pixel blocks are subtracted this signifies that the value associated with a pixel with coordinates (i,j) in a block is subtracted from the value associated with the pixel with coordinates (i,j) in the other block. Likewise, to a block of pixels can be added or from it subtracted a matrix M of coefficients of like size, the value associated with a pixel with coordinates (i,j) in the block being added to respectively subtracted from the value of the coefficient in position (i,j) denoted M(i,j) in the matrix. Generally, a matrix can be identified with a block of coefficients. The invention is more particularly described for a video stream coded in accordance with the MPEG-4 AVC video coding standard such as described in the document ISO/IEC 14496-10 (entitled "Information technology -- Coding of audio-visual objects -- Part 10: Advanced Video Coding"). In accordance with the conventional video compression standards, such as MPEG-2, MPEG-4, and H.264, the images of a sequence of images can be of intra type (I image), i.e. coded without reference to the other images of the sequence or of inter type (i.e. P and B images), i.e. coded by being predicted on the basis of other images of the sequence. The images are generally divided into macroblocks themselves divided into disjoint pixel blocks of size N pixels by P pixels, called NxP blocks. These macroblocks are themselves coded according to an intra or inter coding mode. More precisely all the macroblocks in an I image are coded according to the intra mode while the macroblocks in a P image can be coded according to an inter or intra mode. The possibly predicted macroblocks are thereafter transformed block by block using a transform, for example a discrete cosine transform referenced DCT or else a Hadamard transform. The thus transformed blocks are quantized then coded generally using variable-length codes. In the particular case of the MPEG-2 standard the macroblocks of size 16 by 16 pixels are divided into 8x8 blocks themselves transformed with an 8x8 DCT into transformed 8x8 blocks. In the case of H.264, the macroblocks of intra type relating to the luminance component can be coded according to the intra4x4 mode or according to the intra16x16 mode. An intra macroblock coded according to the intra4x4 mode is divided into 16 disjoint 4x4 blocks. Each 4x4 block is predicted spatially with respect to certain neighbouring blocks situated in a causal neighbourhood, i.e. with each 4x4 block is associated a 4x4 prediction block generated on the basis of the said neighbouring blocks. 4x4 blocks of residuals are generated by subtracting the associated 4x4 prediction block from each of the 4x4 blocks. The 16 residual blocks thus generated are transformed by a 4x4 integer H transform which approximates a 4x4 DCT. An intra macroblock coded according to the intra16x16 mode is predicted spatially with respect to certain neighbouring macroblocks situated in a causal neighbourhood, i.e. a 16x16 prediction block is generated on the basis of the said neighbouring macroblocks. A macroblock of residuals is generated by subtracting the associated prediction macroblock from the intra macroblock. This macroblock of residuals is divided into 16 disjoint 4x4 blocks which are transformed by the H transform. The 16 low-frequency coefficients (called DC coefficients) thus obtained are in their turn transformed by a 4x4 Hadamard transform. Subsequently in the document, the transform H which is applied to a macroblock designates a 4x4 H transform applied to each of the 4x4 blocks of the macroblock if the macroblock is coded in intra4x4 mode and a 4x4 H transform applied to each of the 4x4 blocks of the macroblock followed by a Hadamard transform applied to the DC coefficients if the macroblock is coded in intra16x16 mode.

Watermark reading processes operating in the DCT transformation space on 8x8 blocks exist. These reading processes making it possible in particular to read watermarks inserted in the DCT transformation space by various processes.

A first watermarking process applied for example in the DCT transformation space to the 8x8 transformed blocks denoted $B_{8x8}^{DCT}$ of an image to be watermarked consists in modifying possibly for each block $B_{8x8}^{DCT}$ the order relation existing between the absolute values of two of its DCT coefficients, denoted $\Gamma_1$ and $\Gamma_2$. In general, these two coefficients are selected for a given block with the aid of a secret key. The bit *bi* of the fingerprint associated with a block $B_{8x8}^{DCT}$ is inserted into this block by modifying the order relation existing between the absolute values of the two coefficients $\Gamma_1$ and $\Gamma_2$. In order to check the visibility of the watermark, the coefficients of a block are modified only if the following relation holds:

$$\left\| \Gamma_1 \right| - \left| \Gamma_2 \right\| < S$$

where *S* being a parametrizable threshold

The coefficients $\Gamma_1$ and $\Gamma_2$ are modified so that the following order relation holds:

$$\left| \Gamma_1^{'} \right| = \left| \Gamma_2^{'} \right| + d * B_i \qquad\qquad (1)$$

where: - $\Gamma_1^{'}$ and $\Gamma_2^{'}$ are the modified coefficients,

- *d* is a marking parameter called the marking distance, and
- $B_i$ is a coefficient whose value is defined as follows: $B_i$ =1 if *bi*=0 and $B_i$ = -1 if *bi*=1.

If the order relation already holds, neither of the two coefficients is modified. $\Gamma_1$ and $\Gamma_2$ can be modified in diverse ways so as to ensure the relation defined previously. Let us define $e_1 = \Gamma_1^{'} - \Gamma_1$ and $e_2 = \Gamma_2^{'} - \Gamma_2$, the values of $e_1$ and $e_2$ are defined for each block $B_{8x8}^{DCT}$ in the following manner:

$$e_1 = -\Gamma_1 + sign(\Gamma_1) * \left( f_1(\Gamma_1, \Gamma_2) + d_1 \right) \text{ and } e_2 = -\Gamma_2 + sign(\Gamma_2) * \left( f_2(\Gamma_1, \Gamma_2) + d_2 \right)$$

The choice of the function $f_1$ is free, it is possible for example to choose $f_1$ ($\Gamma_1$, $\Gamma_2$) = $f_2$ ($\Gamma_1$,$\Gamma_2$) =$|\Gamma_2|$. For example, in the case where bi=0, let us choose $d_2$ = -$|\Gamma_2|$ and $d_1$ = -$|\Gamma_2|$+ *d*, then the order relation (1) does indeed hold. In the case where bi=1, let us choose $d_1$ = -$|\Gamma_2|$ and $d_2$ = -$|\Gamma_2|$- *d*, then the order relation (1) also holds. The values of d and of S vary as a function of the application and in particular as a function of the risk of piracy. Specifically, the higher the value of d, the more robust the watermarking but the more visible it is. Thus to preserve a good visual quality of the sequence of images, the marking force must be limited.

According to a second watermarking process applied for example in the DCT transformation space a single coefficient $\Gamma_1$, per block $B_{8x8}^{DCT}$ is modified so that $\left| \Gamma_1^{'} \right| = \lambda$ if $b_i$=0, $|\Gamma_1'|$ = $\mu$ if $b_i$=1. The value $\lambda$ or $\mu$ represents the value of the coefficient $\Gamma_1$ that the watermark reader must actually read to be able to identify the watermarking bit $b_i$.

Such watermarking processes and therefore the processes for reading the watermark have already been developed to operate in the DCT transformation space on 8x8 transformed blocks.

The invention proposes a stream-wise method of watermarking based on a predetermined watermarking process such as for example one of the two watermarking processes described previously without it being limited to these two processes. The watermarking method according to the invention is independent of the compression parameters used. It is in particular independent of the type of the transform. It therefore make it possible to read in a certain transform domain (for example DCT) the watermark inserted in another transform domain (for example H) independently of the format of the data received. According to a particular embodiment, the invention makes it possible to watermark a sequence of images coded in accordance with the MPEG-4 AVC standard. The watermark inserted according to the invention can be read back by a watermark reader operating in the DCT transformation space on 8x8 blocks.

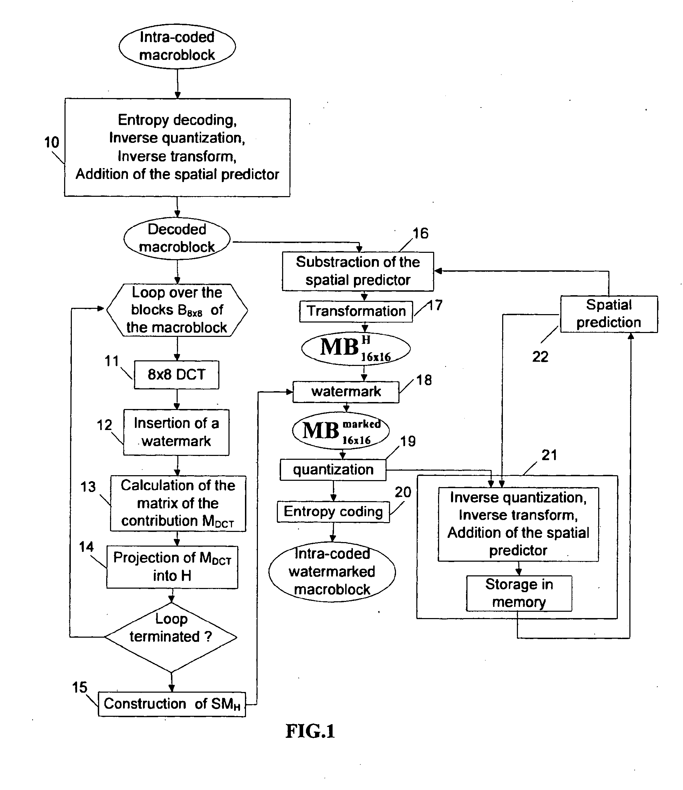

A first embodiment of the invention is illustrated by Figure 1. Only the intra images, termed I images, of a sequence of images are watermarked, more particularly the luminance component of these images. The method according to the invention is described for a '16x16 macroblock referenced $M_{16x16}$ and is preferably applied to all the 16x16 macroblocks of the I image.

Step 10 consists in decoding (e.g. entropy decoding, inverse quantization, inverse transform, and addition of the spatial predictor in the case of the H.264 standard) the parts of the stream of coded data corresponding to the macroblock $MB_{16x16}$ so as to reconstruct the said macroblock. The rest of the method is described for an 8x8 block, referenced $B_{8x8}$, of the macroblock $MB_{16x16}$ reconstructed and is applied to all the 8x8 blocks of this macroblock.

Step 11 consists in transforming the block $B_{8x8}$ by an 8x8 DCT transform into an 8x8 transformed block denoted

$$B_{8x8}^{DCT} .$$

Step 12 consists in watermarking the block $B_{8x8}^{DCT}$ according to a predetermined watermarking process such as for example the first or the second watermarking process described previously or else any other watermarking process making it possible to watermark the image in the DCT transformation space. The watermarking bit assigned to the block $B_{8x8}^{DCT}$ is determined by the fingerprint to be inserted into the I image to which the block $B_{8x8}^{DCT}$ belongs. This step makes it possible to generate a watermarked block denoted $B_{8x8}^{DCT_{Marked}} .$

In step 13, the block $B_{8x8}^{DCT}$ is subtracted from the block $B_{8x8}^{DCT_{Marked}}$ so as to generate a first group of data or watermarking coefficients called a contribution matrix and denoted $M_{DCT}$. According to another embodiment, this difference is calculated only on the coefficients of the block relevant to the watermarking, i.e. the coefficients of the block modified by the watermarking.

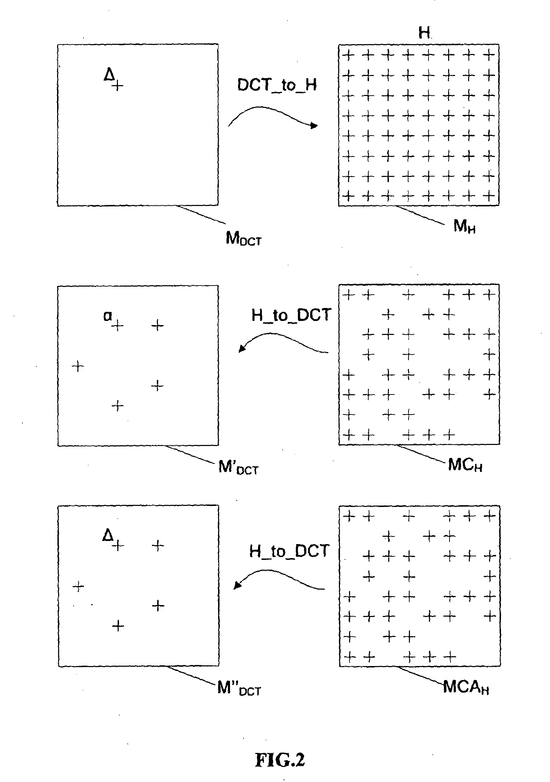

Step 14 consists in expressing the matrix $M_{DCT}$ in the basis H, i.e. in projecting the matrix $M_{DCT}$ into the H space to generate a second group of data or watermarking coefficients also called a contribution matrix and denoted $M_H$. For this purpose, an inverse DCT transform is applied to the matrix $M_{DCT}$ to generate a matrix $M_{DCT}^{-1} .$ The H transform is thereafter applied to each of the 4x4 blocks of the matrix $M_{DCT}^{-1}$ to generate, in the H space, the contribution matrix $M_H$. The change of basis has the effect of distributing over several coefficients the modification induced by the watermarking which was concentrated on one or two coefficients in the DCT basis. Figure 2 illustrates the case where the predetermined watermarking process modifies a single coefficient in the DCT space, the others being zero while in the matrix $M_H$ numerous coefficients are nonzero. In this figure the nonzero coefficients are represented by a cross.

When the four contribution matrices $M_H$ associated with each of the 8x8 blocks of the macroblock $MB_{16x16}$ are generated then the four contribution matrices $M_H$ are grouped together in step 15 to form a contribution super-matrix $SM_H$ of size 16x16 so that each of the matrices $M_H$ has the same position in the super-matrix $SM_H$ as the 8x8 block with which it is associated in the macroblock $MB_{16x16}$. If the macroblock $MB_{16x16}$ is coded according to the intra16x16 mode then a 4x4 Hadamard transform is applied to the 16 DC coefficients of the super-matrix $SM_H$. If none of the macroblocks $MB_{16x16}$ is coded according to the intra 16x16 mode then this step can be omitted.

In step 16, the spatial predictor generated in step 22 is subtracted from the macroblock $MB_{16x16}$ so as to generate a macroblock of residuals which is transformed in step 17 by the H transform and possibly by the 4x4 Hadamard transform in accordance with MPEG-4 AVC. The macroblock thus generated is denoted $MB_{16x16}^{H} .$

Step 18 of watermarking in the H transformation space, also called the writing space, consists then in adding the contribution super-matrix $SM_H$ to the macroblock $MB_{16x16}^{H}$ to generate a watermarked macroblock denoted $MB_{16x16}^{Marked} .$ The macroblock $MB_{16x16}^{Marked}$ watermarked in the transformed space of MPEG-4 AVC is then quantized in step 19 then coded by entropy coding in step 20.

When all the data relating to the I images to be watermarked have been processed, they are multiplexed with the other data of the initial stream of undecoded digital data comprising in particular the data relating to the other images of the sequence.

To the macroblock $\mathrm{MB}_{16x16}^{\mathrm{Marked}}$ quantized in step 19 is applied in step 21 an inverse quantization and an inverse transform (which corresponding to the inverse H transform and possibly which takes account of the 4x4 Hadamard transform). To the macroblock thus generated is added the spatial prediction macroblock which has served in step 16 for the spatial prediction of the macroblock $MB_{16x16}$. The macroblock thus generated is stored in memory to serve for the spatial prediction of future macroblocks.

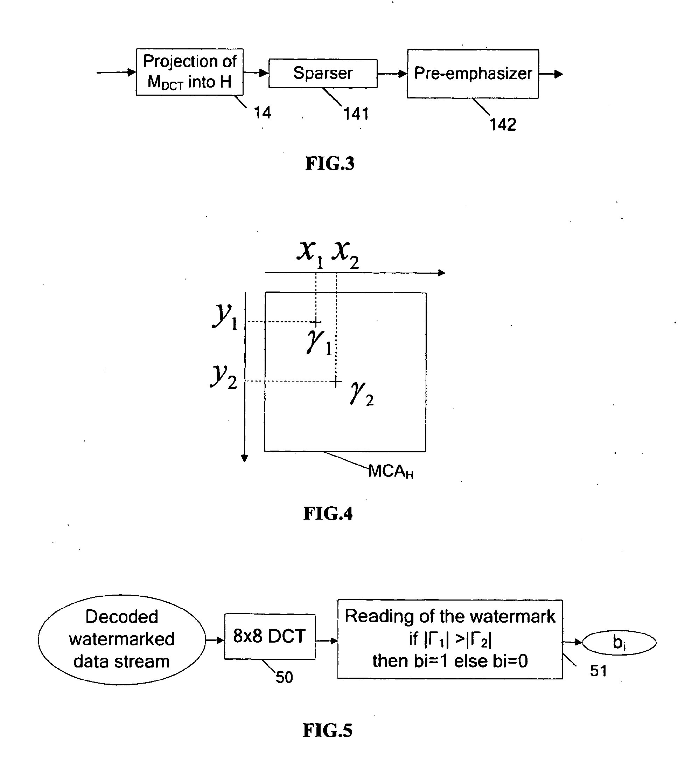

According to another embodiment illustrated by Figure 3, the matrix $M_H$ is thinned out during a step 141, i.e. some of its coefficients are zeroed, prior to the watermarking performed in step 18 so as to limit the increase in the bit rate related to the insertion of the watermarking while limiting the modification due to the watermarking. The sparse matrix thus generated is denoted $MC_H$ in Figure 2. This figure illustrates the particular case where the predetermined watermarking process modifies only a single DCT coefficient per 8x8 block. The sparser the matrix $M_H$, the more deformed will be the resulting watermark in the DCT transformation space and the more its energy will be decreased. In order to minimize these effects, the sparse matrix $MC_H$ selected is the matrix which maximizes the product of the energy $E_{MC}$ of the sparse matrix times the sparseness TC of the matrix $MC_H$. The energy $E_{MC}$ which is proportional to the watermarking energy in the DCT transformation space is defined as follows:

$$E_{MC} = \sqrt{\sum_{i,j} MC_H(i,j)^2} \quad (2)$$

TC is equal to the ratio of the number of zero coefficients of the matrix to the total number of coefficients of the matrix $MC_H$. The sparse matrix $MC_H$ is selected for example by searching in an exhaustive manner among the set denoted $\{MC\}_{M_H}$ of the sparse matrices created from $M_H$ for that one which maximizes the product $E_{MC}$ times TC. For this purpose, the product $E_{MC}$*TC is calculated for each of the matrices of the set $\{MC\}_{M_H}$ and is stored in memory. The matrix of the set $\{MC\}_{M_H}$ which maximizes the product $E_{MC}$*TC is selected.

According to a variant, a minimum value of watermarking energy is fixed. This value corresponds to a minimum value of energy of the sparse matrix equal to $E_{MC}^{\min}$. The sparse matrix $MC_H$ selected is the solution of a constrained optimization problem which consists in determining in the set $\{MC\}_{M_H}$ the sparse matrix having the largest number of zero coefficients and whose energy is greater than or equal to $E_{MC}^{\min}$. The constrained optimization can be performed by a Lagrangian procedure. According to a variant, the energy of the sparse matrix used to characterize the energy of the watermarking can be defined differently, for example by weighting the preceding expression (2) as a function of the spatial frequency of the coefficients. For this purpose, the higher the frequency of a coefficient the lower the weight assigned to this coefficient.

According to a particular embodiment, the matrix $MC_H$ is pre-emphasized or precompensated prior to the watermarking performed in step 18 so as to take account of the bias introduced into the DCT transformation space by the step consisting in thinning out the matrix $M_H$ which disturbs the reading of the watermark in the DCT space. The pre-emphasized sparse matrix is denoted $MCA_H$. The step of pre-emphasis 142 consists in modifying the nonzero coefficients of the sparse matrix $MC_H$ to generate the matrix $MCA_H$ in such a way that this matrix is the closest possible in the reading space (i.e. space in which the reading of the modification induced by the watermarking is performed, in this instance the DCT space) to the desired reading result, for example so as to minimize the mean square error $\|MCA_H -M_H\|^2$. This embodiment illustrated by Figure 2 makes it possible for example to pre-emphasize the matrix $MC_H$ when the predetermined watermarking process used to watermark the 8x8 transformed blocks modifies only a single coefficient $\Gamma_1$ as does the second watermarking process described at the start of the document. Let us assume that the modified coefficient $\Gamma_1$ is positioned at $(i_0, j_0)$ in the block $B_{8x8}^{DCT}$ and that $|\Gamma'_1| = \lambda$. In the matrix $M'_{DCT}$ obtained by projecting $MC_H$ into the DCT transformation space the coefficient at position $(i_0, j_0)$ has the value $\alpha$ instead of the value $\Delta = \lambda - |\Gamma_1|$ which alone allows a correct reading of the watermarking bit $b_i$. The matrix $MC_H$ is therefore pre-emphasized to generate a pre-emphasized sparse matrix, denoted $MCA_H$, so that the value of the coefficient at position $(i_0, j_0)$ in the matrix $M''_{DCT}$, the projection of $MCA_H$ into the DCT transformation space, is equal to $\Delta$. In the embodiment according to the invention, the matrix $MCA_H$ is defined in the following manner: $MCA_H(i,j)=0$ for all the zero coefficients of the matrix $MC_H$

and $MCA_H(i,j) = \dfrac{1}{\beta}\,MC_H(i,j)$ for the other coefficients of the matrix $MC_H$, where $\beta = \dfrac{\alpha}{\lambda - |\Gamma_1|}$, with $\alpha \neq 0$ and

where $\alpha$ is the coefficient at position $(i_0, j_0)$ in the DCT space of the sparse matrix $MC_H$. This pre-emphasis makes it possible to guarantee that the coefficient at position $(i_0, j_0)$ modified by the watermarking in the contribution matrix $M''_{DCT}$ does indeed have the value $\lambda - |\Gamma_1|$ and therefore that the value of the coefficient $\Gamma_1$ modified by the watermarking does indeed have the value $\lambda$.

According to a preferred embodiment, the matrix $M_H$ is thinned out and pre-emphasized jointly. If the predetermined watermarking process modifies two coefficients $\Gamma_1$ and $\Gamma_2$ as does the first watermarking process described at the start of the document, then in the contribution matrix $M_{DCT}$ associated with a block $B_{8x8}$ only two coefficients $e_1$ and $e_2$ are nonzero. The matrix $MCA_H$ is then determined directly from $M_{DCT}$. $MCA_H$ which is a matrix only two of whose coefficients are nonzero is defined by the following relation: $MCA_H = \gamma_1 M(X_1) + \gamma_2 M(X_2)$, where $M(X_i)$ is a matrix all of whose coefficients are zero except the coefficient at position $X_i$ $(x_i, y_i)$ whose value is equal to 1. Such a matrix $MCA_H$ is represented in Figure 4. The projection of the matrix $MCA_H$ into the DCT transformation space is denoted $M_{DCT}^p$.

The coefficients of $M_{DCT}^p$ localized $e'_2 = g(\gamma_1, \gamma_2, X_1, X_2)$. The values $\gamma_1$ and $\gamma_2$ are solutions of the following system: f $(\gamma_1, \gamma_2, X_1, X_2) = e_1$ and $g(\gamma_1, \gamma_1, X_1, X_2) = e_2$. The values $\gamma_1$ and $\gamma_2$ thus determined depend on the values of $X_1$ and $X_2$. These last two values are determined by an exhaustive traversal of all the possible position pairs in the matrix $MCA_H$. For each of the pairs $(X_1, X_2)$, the resulting values $\gamma_1$, and $\gamma_2$ are calculated together with the corresponding quadratic energy $E(\gamma_1, \gamma_2)$. The values of $X_1$ and $X_2$ selected are those which minimize $E(\gamma_1, \gamma_2)$ so as to decrease the visual impact of the watermark. This embodiment described for two coefficients can be applied to N coefficients, $|N|_{[AL1]} \geq 1$.

According to another embodiment, the quantization parameter defined for quantizing each 4x4 block of the I image is modified. A maximum threshold of deformation of the watermarking signal is permitted. The measure of deformation is the mean square error (MSE) between the quantized watermarked signal and the watermarked signal calculated as follows:

$$MSE = \sqrt{\sum_{i,j} (S'_H(i,j) - S_H^{Q}{}'(i,j))^2}\ ,$$

where: - $S_H(i, j)$ is the value associated with the pixel with coordinates (i,j) of the initial signal after spatial prediction and transformation,

- $S'_H(i, j)$ is the value associated with the pixel with coordinates (i,j) of the watermarked signal $S_H(i,j)$, and

- $S_H^{Q}{}'(i, j)$ is the value associated with the pixel with coordinates (i,j) of the signal $S'_H(i, j)$ after quantization.

The maximum watermarking threshold $S_T$ is defined as a function of the chosen deformation measure. According to a particular characteristic, $S_T = \sqrt{\sum_{i,j} (S_H(i,j) - S_H{}'(i,j))^2}$. The quantization parameter for a given 4x4 block is decreased until the induced deformation is lower than the threshold $S_T$.

Figure 5 represents a conventional watermark reading process operating in the DCT transformation space making it possible to read the watermark of a stream of data watermarked in accordance with the invention in the H transformation space when the predetermined watermarking process used is the first process described which modifies two coefficients $\Gamma_1$ and $\Gamma_2$. The 8x8 blocks of a decoded image are transformed by 8x8 DCT in step 50. The watermark reading step 51 processes each of the macroblocks of the image and consists in reading back the associated watermarking bit $b_i$. Advantageously according to the invention such a reading process can be reused to read a watermark inserted by the watermarking method according to the invention even if this watermarking has been performed in a domain of representation other than the DCT domain.

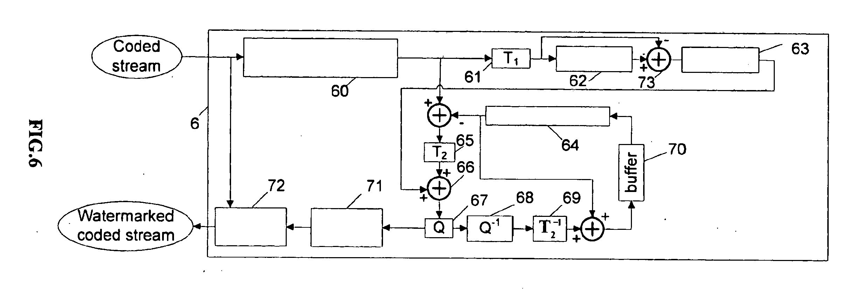

The invention also relates to a watermarking device 6 such as illustrated by Figure 6 which receives as input a stream of digital data coded for example in accordance with the MPEG-4 AVC syntax. This device is able to implement the method according to the invention. In this figure, the modules represented are functional units, which may or may not correspond to physically distinguishable units. For example, these modules or some of them can be grouped together into a single component, or constitute functionalities of one and the same software. Conversely, certain modules may possibly be composed of separate physical entities. According to a particular embodiment, the parts of the stream of data relating to the I images are thereafter decoded by a module 60 operating the reconstruction of the macroblocks (i.e. entropy decoding, inverse quantization, inverse transformation and possibly addition of the spatial prediction of the macroblocks in the case of a stream coded in accordance with the MPEG-4 AVC syntax). The pixel blocks thus reconstructed are thereafter transformed by a module 61. A watermarking module 62 makes it possible to watermark the pixel blocks transformed by a transform $T_1$, for example a DCT. The watermarking device furthermore comprises a module 73 making it possible to subtract from each of the thus watermarked blocks the corresponding unwatermarked block to generate a first watermarking cue also called a contribution matrix $M_{DCT}$. A module 63 makes it possible to project the matrices $M_{DCT}$ into the H transformation space, or more generally into the transformation space $T_2$, so as to generate for each 8x8 block a second watermarking cue called a contribution matrix $M_H$. This module makes it possible also to generate the contribution super-matrix such as defined previously if necessary. The device furthermore comprises an optional spatial prediction module 64 and a module 65 operating an H transform or more generally a transform $T_2$. A module 66 makes it possible to watermark the data transformed by the module 65 in the second transformation space by adding to these transformed data the second watermarking cue generated by the module 63. A module 67 makes it possible to quantize the watermarked macroblock. The device also comprises a module 68 operating an inverse quantization and a module 69 operating an inverse transformation. It moreover comprises a memory 70 making it possible to store the watermarked and decoded macroblocks. Finally, the device comprises a module 71 for entropy coding and a multiplexer 72 making it possible to multiplex the data watermarked according to the invention with the other data of the coded initial stream. The modules 64, 68, 69 and 70 are optional. Specifically, not all the coding standards make it necessary to spatially predict the data before decoding them.

Of course, the invention is not limited to the exemplary embodiments mentioned above. In particular, the person skilled in the art can incorporate any variant into the embodiments set forth and combine them to benefit from their various advantages. In particular the invention described within the framework of a video coding based on the H.264 standard can be extended to any type of support data (audio, 3D data). The embodiments described for a DCT transform and an H transform can be extended to any type of transform. In a general manner, the watermarking method according to the invention consists in watermarking digital data in a first transformation space T1, in generating in this space T1 a first group of coefficients $M_{T1}$ which corresponds to the contribution matrix $M_{DCT}$ in the embodiment described previously, in projecting it into another transformation space $T_2$ to generate a second group of coefficients which corresponds to the contribution matrix $M_H$ in the embodiment described previously and in watermarking the data in this transformation space $T_2$. A watermark reader operating in the transformation space $T_1$ can then read back the watermark inserted in the transformation space $T_2$. In particular, the invention can be applied to other video coding standards such as the VC1 standard described in the SMPTE document entitled "proposed SMPTE Standard for Television: VC1 Compressed Video Bitstream Format and Decoding Process» and referenced SMPTE 421M. When the invention is used with coding standards not using spatial prediction, then steps 16, 21 and 22 of the method according to the invention are not applied. Likewise step 15 is not necessarily applied when the second transform $T_2$ operates solely on blocks of a single size, for example 8x8 blocks. The present invention is not limited to the watermarking processes described previously. Furthermore, the invention has been described in respect of the watermarking of the intra images but can also be applied to the predicted images.

## Claims

1. Method of watermarking a data set comprising:

   - a first step (11) of transforming at least one group of data of the said set by a first transform ($T_1$) into a first group of coefficients in a first transformation space;
   - a first step of watermarking (12) for watermarking the said first group of coefficients according to a predetermined watermarking process;

   **characterized in that** it furthermore comprises:

   - a step for generating (13) a first group of watermarking data representing the modifications induced by the said first step of watermarking (12) on the coefficients of the said first group of coefficients;
   - a first step of projection (14) of the said first group of watermarking data into a second transformation space different from said first transformation space, the said step generating a second group of watermarking data;
   - a second step (17) of transforming the said at least one group of data by a second transform ($T_2$) different from said first transform ($T_1$) into a second group of coefficients in the said second transformation space; and
   - a second step of watermarking (18) for watermarking the said second group of coefficients with the said second group of watermarking data.

**2.** Method according to Claim 1, **characterized in that** the first group of watermarking data is generated (13) by calculating, for each of the said coefficients of the said first group of coefficients, the difference between the said coefficient after the first step of watermarking (12) and the said coefficient before the first step of watermarking.

**3.** Method according to Claim 2, **characterized in that** the coefficients modified by the said first step of watermarking (12) being known, the said difference is calculated only for these coefficients, the other differences being set to zero.

**4.** Method according to one of Claims 1 to 3, **characterized in that** the second step of watermarking (18) of the said second group of coefficients consists in adding to each of the said coefficients of the said second group of coefficients the corresponding datum of the said second group of watermarking data.

**5.** Method according to one of Claims 1 to 4, **characterized in that** the said data set comprises coded data of a sequence of images, **in that** the said at least one group of data comprises coded data of a block of pixels of one of the said images of the said sequence and **in that** the steps of the method are applied after decoding to the said at least one group of data.

**6.** Method according to Claim 5, **characterized in that** the said data set comprises data coded in accordance with one of the coding standards belonging to the set of standards comprising:

- H.264;
- MPEG-2; and
- VC1.

**7.** Method according to Claim 5 or 6, **characterized in that** the steps of the method are applied only to groups of data comprising coded data of pixel blocks belonging to images of the said sequence that are coded independently of the other images of the said sequence.

**8.** Method according to one of Claims 5 to 7, **characterized in that** the first transform ($T_1$) is a discrete cosine transform operating on pixel blocks of size 8 by 8 pixels.

**9.** Method according to one of Claims 5 to 8, **characterized in that** the second transform ($T_2$) is an integer transform approximating a discrete cosine transform operating on pixel blocks of size 4 by 4 pixels.

**10.** Method according to one of Claims 1 to 9, **characterized in that** the step of projection is followed by a step consisting in zeroing a maximum number of watermarking data of the said second group of watermarking data while maximizing the associated watermarking energy, the said step generating a sparse group of watermarking data.

**11.** Method according to Claim 10, **characterized in that** the energy of the watermarking associated with the said second group of watermarking data is proportional to the square root of the sum of the data of the said second group of watermarking data squared.

**12.** Method according to Claim 10 or 11, **characterized in that**, if the predetermined watermarking process modifies the value of a single coefficient in the said first group of coefficients, the step consisting in zeroing a maximum number of watermarking data in the said second group of watermarking data is followed by a step consisting in modifying the value of the nonzero data of the said sparse group of watermarking data to generate a pre-emphasized sparse group of watermarking data in such a way that, when the said pre-emphasized sparse group of watermarking data is projected into the said first transformation space, the nonzero datum in the said first group of watermarking data has the same value as the corresponding datum of the said pre-emphasized sparse group of watermarking data after projection into the said first transformation space.

**13.** Method according to one of Claims 1 to 12, **characterized in that** the said predetermined watermarking process consists for a first group of coefficients with which is associated a watermarking bit *bi* in modifying the value of at most two coefficients $\Gamma_1$ and $\Gamma_2$ of the said first group of coefficients so that the following order relation holds:

$$\left|\Gamma_1^{'}\right| = \left|\Gamma_2^{'}\right| + d * B_i,$$

$\Gamma_1^{'}$ where: - and $\Gamma_2^{'}$ are the two modified coefficients;

- $d$ is a marking parameter called the marking distance; and
- $B_i$ is a coefficient whose value is defined as follows: $B_i = 1$ if $bi=0$ and $B_i$ -1 if $bi=1$.

14. Method according to one of Claims 1 to 9 and Claim 13 itself dependent on Claims 1 to 9, **characterized in that**, if the predetermined watermarking process modifies the value of N coefficients in the said first group of coefficients, the step of projection into the said second transformation space is performed jointly with a step consisting in zeroing data of the said second group of watermarking data and a step consisting in modifying the values of the said M data of the said second group of nonzeroed watermarking data thus generating a pre-emphasized sparse group of watermarking data and **in that** the values and the positions of the said M nonzero data are determined so that the quadratic energy associated with the said pre-emphasized sparse group of watermarking data is minimized and so that when the said pre-emphasized sparse group of watermarking data is projected into the said first transformation space, each of the N nonzero data in the said first group of watermarking data has the same value as the corresponding datum of the said pre-emphasized sparse group of watermarking data after projection into the said first transformation space, with N ≥ 1 and M≥ 1.

15. Method according to Claim 14, **characterized in that** M=2 and N=2.

16. Method according to Claim 14 or 15, **characterized in that** the quadratic energy associated with the said pre-emphasized sparse group of watermarking data is equal the square root of the sum of the coefficients of the said pre-emphasized sparse group of watermarking data squared.

17. Method according to one of Claims 1 to 16, **characterized in that** the step of projection consists in applying to the said first group of watermarking data a transform inverse to the said first transform ($T_1$) then in applying the said second transform ($T_2$) to the said first group of watermarking data after the said transformation by the said inverse transform.

18. Method according to one of Claims 1 to 17, **characterized in that** the said data set belongs to the group comprising:

- data of the image sequence type;
- data of the audio type; and
- data of the 3D type.

19. Device for watermarking a data set comprising:

- first means (61) of transforming at least one group of data of the said set into a first group of coefficients in a first transformation space;
- first predetermined watermarking means (62) for watermarking the said first group of coefficients;

**characterized in that** it furthermore comprises:

- means for generating (73) a first group of watermarking data representing the modifications induced by the said first watermarking means (62) on the coefficients of the said first group of coefficients;
- means (63) for projecting the said first group of watermarking data into a second transformation space different from said first transformation space, the said means generating a second group of watermarking data;
- second means (65) of transforming the said at least one group of data into a second group of coefficients in the said second transformation space; and
- first watermarking means (66) for watermarking the said second group of coefficients with the said second group of watermarking data.

20. Computer program product **characterized in that** it comprises program code instructions for the execution of the steps of the method according to any one of Claims 1 to 18, when the said program is executed on a computer.

**Patentansprüche**

1. Verfahren für die Wasserzeichenmarkierung eines Datensatzes, wobei das Verfahren umfasst:

   - einen ersten Schritt (11) des Transformierens mindestens einer Gruppe von Daten des Satzes durch eine erste Transformation ($T_1$) in eine erste Gruppe von Koeffizienten in einem ersten Transformationsraum;
   - einen ersten Schritt der Wasserzeichenmarkierung (12) zur Wasserzeichenmarkierung der ersten Gruppe von Koeffizienten gemäß einem vorgegebenen Wasserzeichenmarkierungsprozess;

   **dadurch gekennzeichnet, dass** es ferner umfasst:

   - einen Schritt zum Erzeugen (13) einer ersten Gruppe von Wasserzeichenmarkierungsdaten, die die durch den ersten Schritt der Wasserzeichenmarkierung (12) an den Koeffizienten der ersten Gruppe von Koeffizienten eingeführten Modifizierungen repräsentieren;
   - einen ersten Schritt einer Projektion (14) der ersten Gruppe von Wasserzeichenmarkierungsdaten in einen zweiten Transformationsraum, der von dem ersten Transformationsraum verschieden ist, wobei der Schritt eine zweite Gruppe von Wasserzeichenmarkierungsdaten erzeugt;
   - einen zweiten Schritt (17) des Transformierens der mindestens einen Gruppe von Daten durch eine zweite Transformation ($T_2$), die von der ersten Transformation ($T_1$) verschieden ist, in eine zweite Gruppe von Koeffizienten in dem zweiten Transformationsraum; und
   - einen zweiten Schritt der Wasserzeichenmarkierung (18) zur Wasserzeichenmarkierung der zweiten Gruppe von Koeffizienten mit der zweiten Gruppe von Wasserzeichenmarkierungsdaten.

2. Verfahren nach Anspruch 1, **dadurch gekennzeichnet, dass** die erste Gruppe von Wasserzeichenmarkierungsdaten **dadurch** erzeugt wird (13), dass für jeden der Koeffizienten der ersten Gruppe von Koeffizienten die Differenz zwischen dem Koeffizienten nach dem ersten Schritt der Wasserzeichenmarkierung (12) und dem Koeffizienten vor dem ersten Schritt der Wasserzeichenmarkierung berechnet wird.

3. Verfahren nach Anspruch 2, **dadurch gekennzeichnet, dass** die durch den ersten Schritt der Wasserzeichenmarkierung (12) modifizierten Koeffizienten bekannt sind, wobei die Differenz nur für diese Koeffizienten berechnet wird, während die anderen Differenzen auf null gesetzt werden.

4. Verfahren nach einem der Ansprüche 1 bis 3, **dadurch gekennzeichnet, dass** der zweite Schritt der Wasserzeichenmarkierung (18) der zweiten Gruppe von Koeffizienten darin besteht, dass zu jedem der Koeffizienten der zweiten Gruppe von Koeffizienten die entsprechende Dateneinheit der zweiten Gruppe von Wasserzeichenmarkierungsdaten addiert wird.

5. Verfahren nach einem der Ansprüche 1 bis 4, **dadurch gekennzeichnet, dass** der Datensatz codierte Daten einer Sequenz von Bildern umfasst, **dadurch**, dass die mindestens eine Gruppe von Daten codierte Daten eines Blocks von Pixeln eines der Bilder der Sequenz umfasst, und **dadurch**, dass die Schritte des Verfahrens nach dem Decodieren auf die mindestens eine Gruppe von Daten angewendet werden.

6. Verfahren nach Anspruch 5, **dadurch gekennzeichnet, dass** der Datensatz Daten umfasst, die in Übereinstimmung mit einer der Codierungsnormen codiert worden sind, die zu dem Satz von Normen gehören, der umfasst:

   - H.264;
   - MPEG-2; und
   - VC1.

7. Verfahren nach Anspruch 5 oder 6, **dadurch gekennzeichnet, dass** die Schritte des Verfahrens nur auf Gruppen von Daten angewendet werden, die codierte Daten von Pixelblöcken umfassen, die zu Bildern der Sequenz gehören, die unabhängig von den anderen Bildern der Sequenz codiert worden sind.

8. Verfahren nach einem der Ansprüche 5 bis 7, **dadurch gekennzeichnet, dass** die erste Transformation ($T_1$) eine diskrete Kosinustransformation ist, die Pixelblöcke der Größe von 8 mal 8 Pixeln bearbeitet.

9. Verfahren nach einem der Ansprüche 5 bis 8, **dadurch gekennzeichnet, dass** die zweite Transformation ($T_2$) eine ganzzahlige Transformation ist, die eine diskrete Kosinustransformation, die Pixelblöcke der Größe von 4 mal 4 Pixeln bearbeitet, annähert.

**10.** Verfahren nach einem der Ansprüche 1 bis 9, **dadurch gekennzeichnet, dass** auf den Schritt einer Projektion ein Schritt folgt, der darin besteht, dass eine maximale Anzahl von Wasserzeichenmarkierungsdaten der zweiten Gruppe von Wasserzeichenmarkierungsdaten auf null gesetzt werden, während die zugeordnete Wasserzeichenmarkierungsenergie maximal gemacht wird, wobei der Schritt eine dünnbesiedelte Gruppe von Wasserzeichenmarkierungsdaten erzeugt.

**11.** Verfahren nach Anspruch 10, **dadurch gekennzeichnet, dass** die Energie der Wasserzeichenmarkierung, die der zweiten Gruppe von Wasserzeichenmarkierungsdaten zugeordnet ist, proportional zur Quadratwurzel aus der Summe der quadrierten Daten der zweiten Gruppe von Wasserzeichenmarkierungsdaten ist.

**12.** Verfahren nach Anspruch 10 oder 11, **dadurch gekennzeichnet, dass** dann, wenn der vorgegebene Wasserzeichenmarkierungsprozess den Wert eines einzelnen Koeffizienten in der ersten Gruppe von Koeffizienten modifiziert, auf den Schritt, der darin besteht, dass eine maximalen Anzahl von Wasserzeichenmarkierungsdaten in der zweiten Gruppe von Wasserzeichenmarkierungsdaten auf null gesetzt werden, ein Schritt folgt, der darin besteht, dass der Wert der von null verschiedenen Daten der dünnbesiedelten Gruppe von Wasserzeichenmarkierungsdaten in der Weise modifiziert wird, um eine vorverzerrte dünnbesiedelte Gruppe von Wasserzeichenmarkierungsdaten in der Weise zu erzeugen, dass dann, wenn die vorverzerrte dünnbesiedelte Gruppe von Wasserzeichenmarkierungsdaten in den ersten Transformationsraum projiziert wird, die von null verschiedene Dateneinheit in der ersten Gruppe von Wasserzeichenmarkierungsdaten denselben Wert wie die entsprechende Dateneinheit der vorverzerrten dünnbesiedelten Gruppe von Wasserzeichenmarkierungsdaten nach der Projektion in den ersten Transformationsraum besitzt.

**13.** Verfahren nach einem der Ansprüche 1 bis 12, **dadurch gekennzeichnet, dass** der vorgegebene Wasserzeichenmarkierungsprozess für eine erste Gruppe von Koeffizienten, denen ein Wasserzeichenmarkierungsbit bi zugeordnet ist, darin besteht, dass der Wert von höchstens zwei Koeffizienten $\Gamma_1$ und $\Gamma_2$ der ersten Gruppe von Koeffizienten so modifiziert wird, dass die folgende Ordnungsrelation gilt:

$$|\Gamma_1'| \; = \; |\Gamma_2'| \; + \; d \cdot B_i,$$

wobei:

- $\Gamma_1'$ und $\Gamma_2'$ die zwei modifizierten Koeffizienten sind;
- $d$ ein die Markierungsdistanz genannter Markierungsparameter ist; und
- $B_i$ ein Koeffizient ist, dessen Wert wie folgt definiert ist: $B_i$ = 1, falls $bi$ = 0 ist, und $B_i$ = -1, falls $bi$ = 1 ist.

**14.** Verfahren nach einem der Ansprüche 1 bis 9 und nach Anspruch 13, selbst abhängig von Anspruch 1 bis 9, **dadurch gekennzeichnet, dass** dann, wenn der vorgegebene Wasserzeichenmarkierungsprozess den Wert von N Koeffizienten in der ersten Gruppe von Koeffizienten modifiziert, der Schritt der Projektion in den zweiten Transformationsraum gemeinsam mit einem Schritt, der im Nullsetzen von Daten der zweiten Gruppe von Wasserzeichenmarkierungsdaten besteht, und mit einem Schritt, der im Modifizieren der Werte der M Daten der zweiten Gruppe nicht auf null gesetzter Wasserzeichenmarkierungsdaten besteht, ausgeführt wird, sodass eine vorverzerrte dünnbesiedelte Gruppe von Wasserzeichenmarkierungsdaten erzeugt wird, und **dadurch**, dass die Werte und die Stellen der M von null verschiedenen Daten so bestimmt werden, dass die der vorverzerrten dünnbesiedelten Gruppe von Wasserzeichenmarkierungsdaten zugeordnete quadratische Energie minimal gemacht wird, und so, sodass dann, wenn die vorverzerrte dünnbesiedelte Gruppe von Wasserzeichenmarkierungsdaten in den ersten Transformationsraum projiziert wird, jedes der N von null verschiedenen Datenelemente in der ersten Gruppe von Wasserzeichenmarkierungsdaten denselben Wert wie das entsprechende Datenelement der vorverzerrten dünnbesiedelten Gruppe von Wasserzeichenmarkierungsdaten nach der Projektion in den ersten Transformationsraum besitzt, wobei $N \geq 1$ und $M \geq 1$ ist.

**15.** Verfahren nach Anspruch 14, **dadurch gekennzeichnet, dass** M = 2 und N = 2 sind.

**16.** Verfahren nach Anspruch 14 oder 15, **dadurch gekennzeichnet, dass** die der vorverzerrten dünnbesiedelten Gruppe von Wasserzeichenmarkierungsdaten zugeordnete quadratische Energie gleich der Quadratwurzel aus der Summe der quadrierten Koeffizienten der vorverzerrten dünnbesiedelten Gruppe von Wasserzeichenmarkierungsdaten ist.

17. Verfahren nach einem der Ansprüche 1 bis 16, **dadurch gekennzeichnet, dass** der Schritt der Projektion darin besteht, dass auf die erste Gruppe von Wasserzeichenmarkierungsdaten eine Transformation angewendet wird, die invers zu der ersten Transformation ($T_1$) ist, und dass daraufhin auf die erste Gruppe von Wasserzeichenmarkierungsdaten nach der Transformation durch die inverse Transformation die zweite Transformation ($T_2$) angewendet wird.

18. Verfahren nach einem der Ansprüche 1 bis 17, **dadurch gekennzeichnet, dass** der Datensatz zu der Gruppe gehört, die umfasst:

   - Daten vom Bildsequenztyp
   - Daten vom Audiotyp; und
   - Daten vom 3D-Typ.

19. Vorrichtung zur Wasserzeichenmarkierung eines Datensatzes, wobei die Vorrichtung umfasst:

   - ein erstes Mittel (61) zum Transformieren mindestens einer Gruppe von Daten des Satzes in eine erste Gruppe von Koeffizienten in einem ersten Transformationsraum;
   - ein erstes vorgegebenes Wasserzeichenmarkierungsmittel (62) zur Wasserzeichenmarkierung der ersten Gruppe von Koeffizienten;

   **dadurch gekennzeichnet, dass** sie ferner umfasst:

   - ein Mittel (73) zum Erzeugen einer ersten Gruppe von Wasserzeichenmarkierungsdaten, die die durch das erste Wasserzeichenmarkierungsmittel (62) an den Koeffizienten der ersten Gruppe von Koeffizienten eingeführten Modifizierungen repräsentieren;
   - ein Mittel (63) zum Projizieren der ersten Gruppe von Wasserzeichenmarkierungsdaten in einen zweiten Transformationsraum, der von dem ersten Transformationsraum verschieden ist, wobei das Mittel eine zweite Gruppe von Wasserzeichenmarkierungsdaten erzeugt;
   - ein zweites Mittel (65) zum Transformieren der mindestens einen Gruppe von Daten in eine zweite Gruppe von Koeffizienten in dem zweiten Transformationsraum; und
   - ein erstes Wasserzeichenmarkierungsmittel (66) zur Wasserzeichenmarkierung der zweiten Gruppe von Koeffizienten mit der zweiten Gruppe von Wasserzeichenmarkierungsdaten.

20. Computerprogrammprodukt, **dadurch gekennzeichnet, dass** es Programmcodeanweisungen für die Ausführung der Schritte des Verfahrens gemäß einem der Ansprüche 1 bis 18 umfasst, wenn das Programm auf einem Computer ausgeführt wird.

**Revendications**

1. Procédé de tatouage d'un ensemble de données comprenant:

   - une première étape (11) de transformation d'au moins un groupe de données dudit ensemble par une première transformée ($T_1$) en un premier groupe de coefficients dans un premier espace de transformation;
   - une première étape de tatouage (12) pour tatouer ledit premier groupe de coefficients selon un processus de tatouage prédéterminé ;

   **caractérisé en ce qu'**il comprend en outre :

   - une étape pour générer (13) un premier groupe de données de tatouage représentant les modifications induites par ladite première étape de tatouage (12) sur les coefficients dudit premier groupe de coefficients ;
   - une première étape de projection (14) dudit premier groupe de données de tatouage dans un deuxième espace de transformation différent dudit premier espace de transformation, ladite étape générant un deuxième groupe de données de tatouage ;
   - une deuxième étape (17) de transformation dudit au moins un groupe de données par une deuxième trans-

formée ($T_2$) différente de ladite première transformée ($T_1$) en un deuxième groupe de coefficients dans ledit deuxième espace de transformation; et
- une deuxième étape de tatouage (18) pour tatouer ledit deuxième groupe de coefficients avec ledit deuxième groupe de données de tatouage.

**2.** Procédé selon la revendication 1, **caractérisé en ce que** le premier groupe de données de tatouage est généré (13) en calculant, pour chacun desdits coefficients dudit premier groupe de coefficients, la différence entre ledit coefficient après la première étape de tatouage (12) et ledit coefficient avant la première étape de tatouage.

**3.** Procédé selon la revendication 2, **caractérisé en ce que** les coefficients modifiés par ladite première étape de tatouage (12) étant connus, ladite différence n'est calculée que pour ces coefficients, les autres différences étant mises à zéro.

**4.** Procédé selon l'une des revendications 1 à 3, **caractérisé en ce que** la deuxième étape de tatouage (18) dudit deuxième groupe de coefficients consiste à additionner à chacun desdits coefficients dudit deuxième groupe de coefficients la donnée correspondante dudit deuxième groupe de données de tatouage.

**5.** Procédé selon l'une des revendications 1 à 4, **caractérisé en ce que** ledit ensemble de données comprend des données codées d'une séquence d'images, **en ce que** ledit au moins un groupe de données comprend des données codées d'un bloc de pixels d'une desdites images de ladite séquence et **en ce que** les étapes du procédé sont appliquées après décodage audit au moins un groupe de données.

**6.** Procédé selon la revendication 5, **caractérisé en ce que** ledit ensemble de données comprend des données codées conformément à l'une des normes de codage appartenant à l'ensemble des normes comprenant :

   - H.264 ;
   - MPEG-2 ; et
   - VC1.

**7.** Procédé selon la revendication 5 ou 6, **caractérisé en ce que** les étapes du procédé sont appliquées uniquement à des groupes de données comprenant des données codées de blocs de pixels appartenant à des images de ladite séquence codées indépendamment des autres images de ladite séquence.

**8.** Procédé selon l'une des revendications 5 à 7, **caractérisé en ce que** la première transformée ($T_1$) est une transformée en cosinus discrète opérant sur des blocs de pixels de taille 8 par 8 pixels.

**9.** Procédé selon l'une des revendications 5 à 8, **caractérisé en ce que** la deuxième transformée ($T_2$) est une transformée entière approximant une transformée en cosinus discrète opérant sur des blocs de pixels de taille 4 par 4 pixels.

**10.** Procédé selon l'une des revendications 1 à 9, **caractérisé en ce que** l'étape de projection est suivie d'une étape consistant à annuler un nombre maximum de données de tatouage dudit deuxième groupe de données de tatouage tout en maximisant l'énergie de tatouage associée, ladite étape générant un groupe creux de données de tatouage.

**11.** Procédé selon la revendication 10, **caractérisé en ce que** l'énergie du tatouage associée audit deuxième groupe de données de tatouage est proportionnelle à la racine carrée de la somme des données dudit deuxième groupe de données de tatouage au carré.

**12.** Procédé selon la revendication 10 ou 11, **caractérisé en ce que**, si le processus de tatouage prédéterminé modifie la valeur d'un seul coefficient dans ledit premier groupe de coefficients, l'étape consistant à annuler un nombre maximum de données de tatouage dans ledit deuxième groupe de données de tatouage est suivie d'une étape consistant à modifier la valeur des données non nulles dudit groupe creux de données de tatouage pour générer un groupe creux pré-accentué de données de tatouage de manière à ce que, lorsque ledit groupe creux pré-accentué de données de tatouage est projeté dans ledit premier espace de transformation, la donnée non nulle dans ledit premier groupe de données de tatouage ait la même valeur que la donnée correspondante dudit groupe creux pré-accentué de données de tatouage après projection dans ledit premier espace de transformation.

**13.** Procédé selon l'une des revendications 1 à 12, **caractérisé en ce que** ledit processus de tatouage prédéterminé consiste pour un premier groupe de coefficients auquel est associé un bit de tatouage bi à modifier la valeur d'au plus deux coefficients $\ulcorner_1$ et $\ulcorner_2$ dudit premier groupe de coefficients de telle sorte que la relation d'ordre suivante soit vérifiée :

$$\left|\Gamma_1^{'}\right| = \left|\Gamma_2^{'}\right| + d * B_i \,,$$

où :

- $\Gamma_1^{'}$ et $\Gamma_2^{'}$ sont les deux coefficients modifiés ;
- $d$ est un paramètre de marquage appelé distance de marquage ; et
- $B_i$ est un coefficient dont la valeur est définie comme suit : $B_i$ =1 si $bi$=0 et $B_i$ = -1 si $bi$=1.

**14.** Procédé selon l'une des revendications 1 à 9 et la revendication 13 elle-même dépendant des revendications 1 à 9, **caractérisé en ce que**, si le processus de tatouage prédéterminé modifie la valeur de N coefficients dans ledit premier groupe de coefficients, l'étape de projection dans ledit deuxième espace de transformation est effectuée conjointement avec une étape consistant à annuler des données dudit deuxième groupe de données de tatouage et une étape consistant à modifier la valeurs desdites M données dudit deuxième groupe de données de tatouage non annulées générant ainsi un groupe creux pré-accentué de données de tatouage et **en ce que** les valeurs et les positions desdites M données non nulles sont déterminées de telle sorte que l'énergie quadratique associée audit groupe creux pré-accentué de données de tatouage soit minimisée et de telle sorte que lorsque ledit groupe creux pré-accentué de données de tatouage est projeté dans ledit premier espace de transformation, chacune des N données non nulles dans ledit premier groupe de données de tatouage ait la même valeur que la donnée correspondante dudit groupe creux pré-accentué de données de tatouage après projection dans ledit premier espace de transformation, avec N ≥ 1 et M ≥ 1 .

**15.** Procédé selon la revendication 14, **caractérisé en ce que** M=2 et N=2.

**16.** Procédé selon la revendication 14 ou 15, **caractérisé en ce que** l'énergie quadratique associée audit groupe creux pré-accentué de données de tatouage est égale la racine carrée de la somme des coefficients dudit groupe creux pré-accentué de données de tatouage au carré.

**17.** Procédé selon l'une des revendications 1 à 16, **caractérisé en ce que** l'étape de projection consiste à appliquer sur ledit premier groupe de données de tatouage une transformée inverse de ladite première transformée ($T_1$) puis à appliquer ladite deuxième transformée ($T_2$) sur ledit premier groupe de données de tatouage après ladite transformation par ladite transformée inverse.

**18.** Procédé selon l'une des revendications 1 à 17, **caractérisé en ce que** ledit ensemble de données appartient au groupe comprenant :

- des données du type séquence d'images ;
- des données du type audio ; et
- des données du type 3D.

**19.** Dispositif de tatouage d'un ensemble de données comprenant :

- des premiers moyens (61) de transformation d'au moins un groupe de données dudit ensemble en un premier groupe de coefficients dans un premier espace de transformation;
- des premiers moyens de tatouage prédéterminés (62) pour tatouer ledit premier groupe de coefficients ;

**caractérisé en ce qu'**il comprend en outre :

- des moyens pour générer (73) un premier groupe de données de tatouage représentant les modifications induites par lesdits premiers moyens de tatouage (62) sur les coefficients dudit premier groupe de coefficients ;
- des moyens (63) pour projeter ledit premier groupe de données de tatouage dans un deuxième espace de transformation différent dudit premier espace de transformation, lesdits moyens générant un deuxième groupe de données de tatouage ;

- des seconds moyens (65) de transformation dudit au moins un groupe de données en un deuxième groupe de coefficients dans ledit deuxième espace de transformation; et

- des premiers moyens de tatouage (66) pour tatouer ledit deuxième groupe de coefficients avec ledit deuxième groupe de données de tatouage.

20. Produit programme d'ordinateur **caractérisé en ce qu'**il comprend des instructions de code de programme pour l'exécution des étapes du procédé selon l'une quelconque des revendications 1 à 18, lorsque ledit programme est exécuté sur un ordinateur.

**FIG.1**

**FIG.2**

| Projection of $M_{DCT}$ into H | → | Sparser | → | Pre-emphasizer | → |

14    141    142

**FIG.3**

**FIG.4**

| Decoded watermarked data stream | → | 8x8 DCT | → | Reading of the watermark if $|\Gamma_1| > |\Gamma_2|$ then bi=1 else bi=0 | → | $b_i$ |

50    51

**FIG.5**

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Wu et al.** Robust watermark embedding/detection algorithm for H.264 video. *Journal of Electronic Imaging describes a blind watermark embedding/detection algorithm to embed watermarks into H.264's I pictures*